# EUROPEAN PATENT SPECIFICATION

(11) **EP 0 679 567 B1**
(45) Date of publication and mention of the grant of the patent: **25.11.1998**
(21) Application number: 94830205.4
(22) Date of filing: 29.04.1994
(51) Int. Cl.: B62H 3/04

(54) **A parking device for two-wheeled vehicles**
Parkvorrichtung für Zweiradfahrzeug
Dispositif de parking pour véhicule à deux roues

(43) Date of publication of application: 02.11.1995
(73) Proprietor: CAPITELVECCHIO S.r.l., I-36060 Bassano del Grappa (VI) (IT)
(72) Inventor: Andreazza, Ernesto, I-31050 Vedelago (TV) (IT)
(74) Representative: Lanzoni, Luciano

(56) References cited:
- EP-A- 0 111 352
- GB-A- 815 269

## Description

The invention relates to a device for parking two-wheeled vehicles, and is especially applicable in urban areas where there are parks and pedestrian zones.

For ecological reasons, but also from a desire to exercise regularly, people are returning to use of the bicycle as a mode of transport, and not just for a Sunday ride. Indeed, where distances are not too inhibitive, people are using the bicycle again as an authentic working means of getting from one place to another.

It almost goes without mentioning that modern day traffic problems have contributed to the re-emergence of the bicycle, but it is worth noting that as many parts of many city centres are now not open to motor vehicles, bicycles are actually quicker to get around on; and this is a trend which must surely increase.

With the increase in cycling, however, there grows a need for places to park them, in parking lots which in some way guarantee the security of this light and easy-to-misappropriate vehicle. At present the most popular type of bicycle-park is constituted by a rigid metallic structure with parallel or diverging grid elements, housing between them a bicycle wheel. Both types of grid present drawbacks, however: if the grid elements are parallel, they can only receive wheels having a smaller breadth than the distance dividing them, and only when the wheel is of a similar breadth to the distance between the grids will the bicycle be well held up. If the grid elements diverge, they can receive any breadth of wheel, but have excessive play at the grid if the wheels are narrow and oblige the cyclist to leave his or her bicycle only partially inserted into the grill should the cycle have broad wheels.

The few alternatives offered on the market, as shown in GB-A-815 269, employ mechanisms which guarantee the blocking of the wheel, sometimes by combining safety locks, but do not guarantee the stability of the bicycle during the owner's absence; so it is quite common for the owner to return to find his vehicle sprawling on the ground or leaning on a neighbouring machine after having skewed about on its blocked wheel.

A pincipal aim of the present invention, as it is characterised in the claims that follow, is to obviate the above-mentioned drawbacks by providing a device for stably parking two-wheeled vehicles, comprising elastic means for a bilateral blocking of one of the wheels, which means guarantee the bicycle's stability in an erect position, by automatically balancing the pressures of the two elastic elements. The result is that the bicycle stays in a vertical position, that is, perpendicular to the ground, even when it is unevenly loaded.

The special structure of the device enables it to be associated to fixed structures, even at various angles, as well as to other identical parking devices, so that bicycle parks can be constructed either with the devices attached to fixed structures, or back-to-back to each other, in a sort of herringbone arrangement, or even perpendicular to fixed central structures, in a star arrangement. The small mass of the device enables it to be arranged advantageously in any situation.

Finally, the device is attractive to behold, and integrates perfectly with a pleasant modern urban topography.

Further characteristics and advantages of the present invention will better emerge from the detailed description that follows, of an embodiment of the invention, illustrated in the form of a non-limiting example in the accompanying drawings, in which:
figure 1 is a perspective view of the invention in a working application;

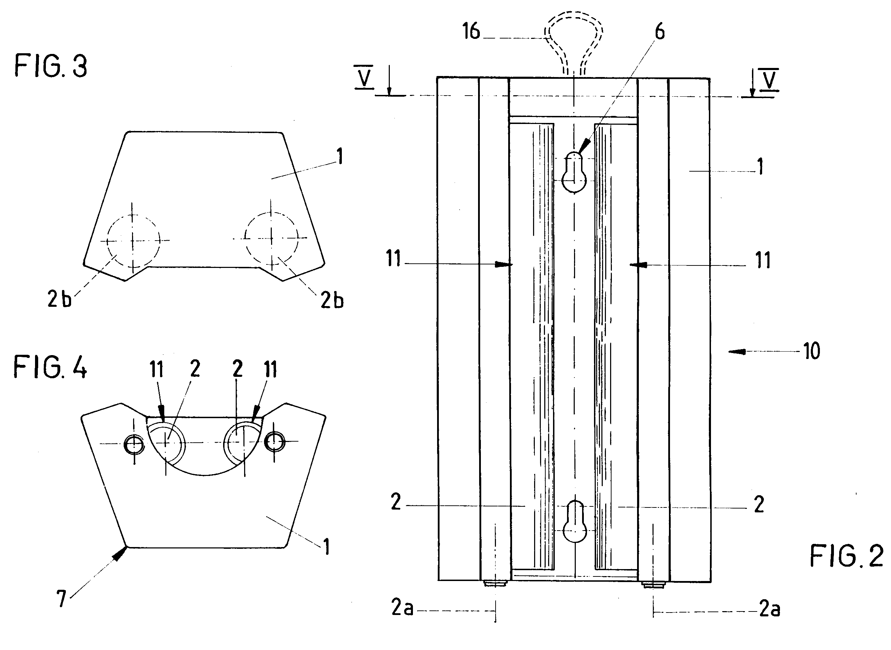

figure 2 is a frontal view of the invention;
figures 3 and 4 are two plan views, respectively upper and lower, of the invention;
figure 5 shows the invention according to line V-V of figure 2;
figure 6 shows the invention according to section VI-VI of figure 5.

With reference to the figures, the invention comprises at least one support element 1 provided with means 6 for constraining said element 1 to fixed structures, constituted in this embodiment by keyhole slots, mobile gripping elements 11 for bilaterally gripping and blocking a wheel 3 constrained to the support element 1, and further means 12 for connecting the mobile gripping elements 11 one to the other such that they exert a same pressure on said wheel 3 when introduced.

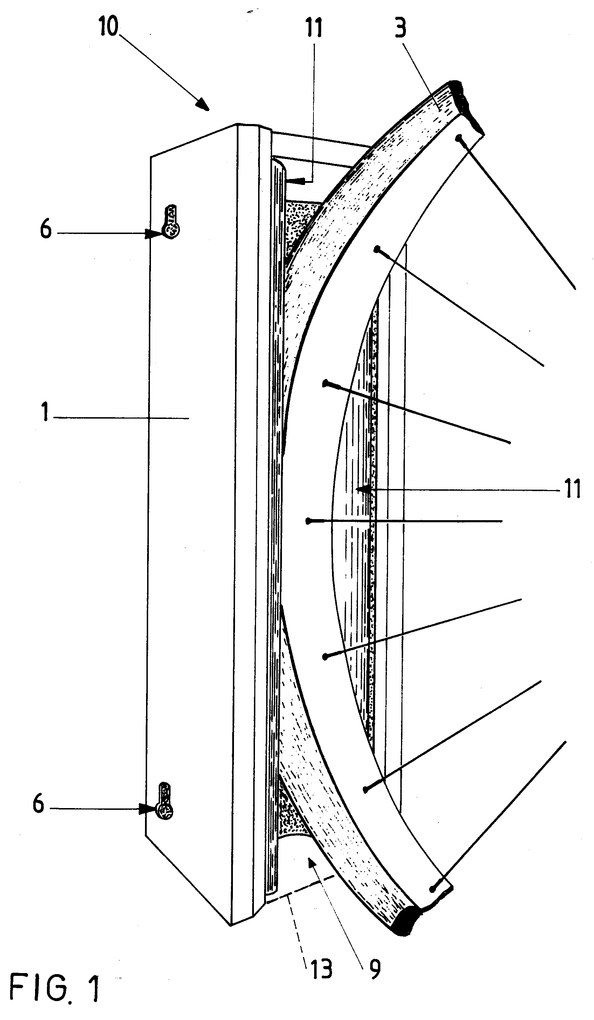

To facilitate entrance of the wheel 3 into the space between the gripping elements 11, the support element 1 is provided with a recess 9 or alternatively a sliding surface 13, indicated by a broken line in figure 1.

The support element 1 further comprises a polyhedric external edge 7 along which, and on each face of the polyhedron, the keyhole slots 6 for constraining the support element 1 to fixed structures are arranged, so that the device can be constrained at various angles to other structures.

In the embodiment shown in the figures, the mobile gripping elements 11 comprise two cylindrical bars 2 having parallel rotation axes 2a and being eccentrically rotatable in relation to the support element 1, and also comprise at least one elastic element 14, interposed between the bars 2 to oppose rotation of the latter, and thus to guarantee a good grip of the wheel 3 therebetween.

Insertion of a wheel 3 causes the bars 2 to rotate from a rest position, wherein the space between them is smaller than a width of a wheel 3, to an active position, wherein the bars 2 are rotated in opposite directions and grip the wheel 3 between them, thanks to the presence of the elastic element 14.

The external faces 8 of the device 10 can be considerably reduced in size and number to save materials and contain the mass of the device 10, but it is important that at least one of the front faces be conserved since it functions as an endrun stop to prevent the bars from rotating too much and becoming subject to inverse-direction motion.

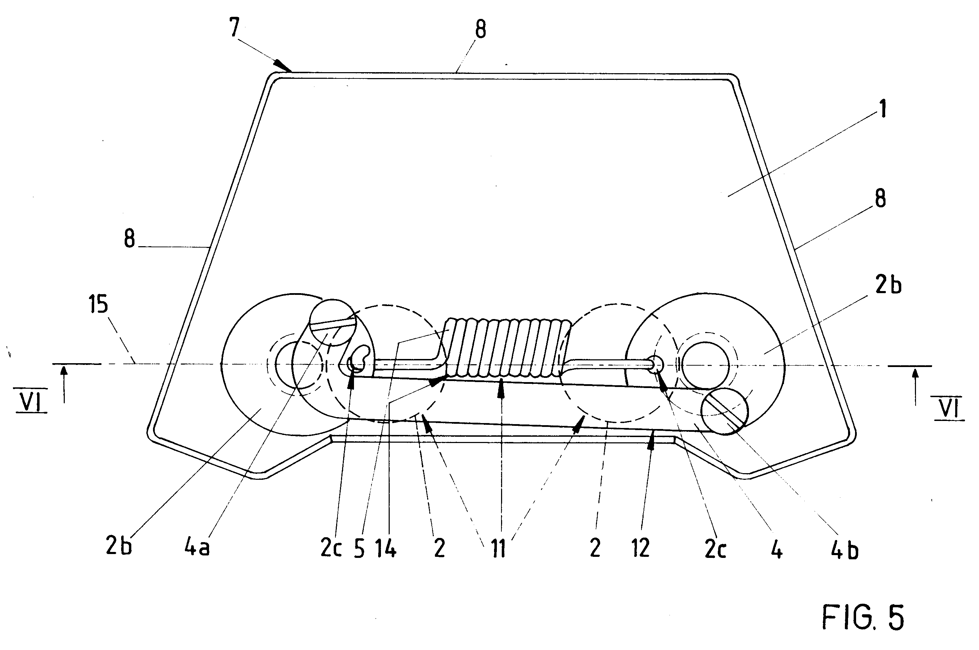

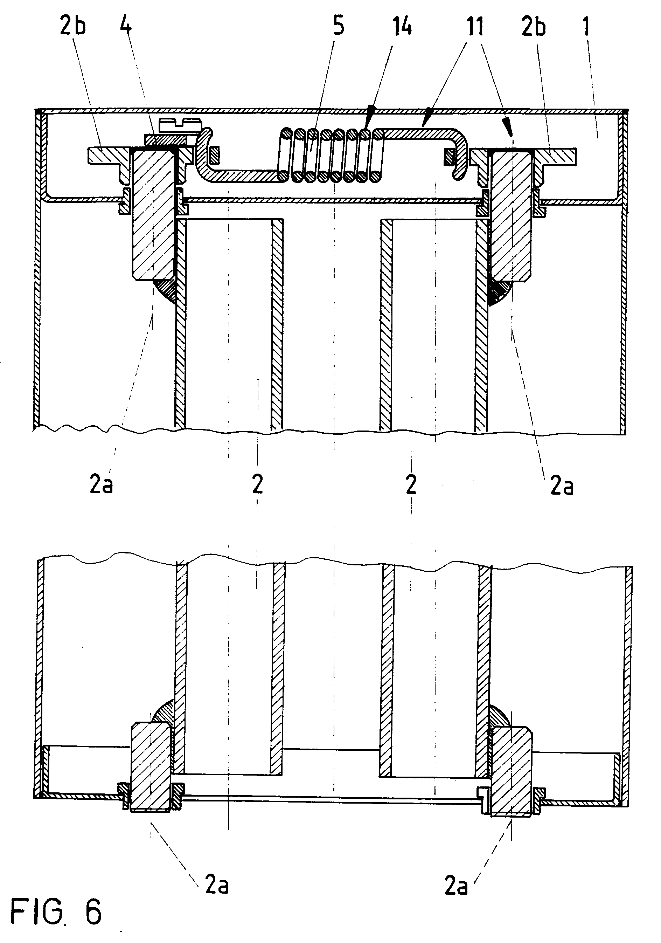

Figures 5 and 6 show that the elastic element 14 is in fact a torsion spring 5 and is hooked at its ends to the bars 2 in eyelets 2c which, in the spring 5 rest position, are opposite one another.

The eyelets 2c are made in washers 2b externally solidly constrained to the bars 2 such as to leave the bars 2 free to rotate.

The means 12 for coupling the mobile gripping elements 11 comprise at least one rigid element, in this embodiment an L-shaped bar 4, constrained to upper ends of the bars 2 by their ends 4a, 4b. The L-shaped bar 4 has its ends 4a, 4b on opposite sides of a straight line 15 joining the rotation axes 2a of the bars 2, its length being equal to a distance between the axes 2a, in order to avoid blockage and inverse rotation of the bars 2.

The introduction of a wheel 3 causes the bars 2 to rotate and to stretch the torsion spring 5 which leads to the wheel 3 being gripped between the bars 2 when fully inserted.

Even where the bars 2 are not equally pushed by the wheel 3, the presence of the L-shaped bar 4 ensures that a rotation imparted on one of the bars 2 is equally imposed on the other thereof.

The L-shape is necessary since, if the ends 4a and 4b were on a same side of the line 15, the bars 2 would rotate in a same direction, resulting in opposite forces being imparted on the wheel 3.

This would also happen if the length of the L-shaped bar were greater than a distance between the axes 2a; whereas if such distance were smaller, the mechanism would block or in any case would permit an insertion of a wheel 3 with a smaller breadth than the maximum acceptable breadth.

Finally, the device 10 can be superiorly equipped with a ring through which a safety chain can be looped.

## Claims

1. A device for parking two-wheeled vehicles, comprising at least one support element (1) provided with means for constraining (6) said support element (1) to a fixed structure, mobile gripping elements (11) for gripping a wheel (3) bilaterally, which elements (11) are constrained to the support element (1), characterised in that it further comprises:
- at least one elastic element (14) interposed between the mobile gripping elements (11) to oppose a rotation of the mobile gripping elements (11) and guarantee a gripping of the wheel (3);
- means (12) for coupling the mobile gripping elements (11) such that said elements (11) are equally moved.

2. A device as in claim 1, characterised in that the support element (1) affords a recess (9) into which a wheel (3) can be inserted.

3. A device as in claim 1, characterised in that the support element (1) exhibits a sliding surface (13) by means of which a wheel (3) can be inserted into said support element (1).

4. A device as in claim 1, characterised in that the support element (1) comprises a polyhedric edge (7), said means for constraining (6) being arranged on more than one face (8) of said edge (7) in order to permit of stably fixing the device at more than one angle to a fixed structure.

5. A device as in claim 1, characterised in that the mobile gripping elements (11) comprise: two cylindrical bars (2) having parallel rotation axes (2a) and which are eccentrically rotatable in relation to the support element (1), such that they pass from a rest position, in which the bars (2) are separated by a distance which is smaller than a breadth of a wheel (3), into an active position, in which the bars (2) are rotated, one in an opposite direction to another, such that a wheel (3) can be inserted therebetween.

6. A device as in claim 5, characterised in that the elastic element (14) is a torsion spring (5) having ends constrained to the cylindrical bars (2) in eyelets (2c), which eyelets (2c) are exactly opposite one to another when the cylindrical bars (2) are in the rest position.

7. A device as in claim 5, characterised in that the means (12) for coupling the mobile gripping elements (11) comprise at least one rigid element constrained by ends (4a, 4b) to upper ends of the cylindrical bars (2).

8. A device as in claim 7, characterised in that the rigid element is an L-shaped bar (4) having ends (4a, 4b) at opposite sides of a straight line (15) joining the rotation axes (2a) of the bars (2), and being of an equal length to a distance between said rotation axes (2a), such that blocking and inverse-direction rotations of the bars (2) are obviated.

## Patentansprüche

1. Vorrichtung zum stabilen Parken von Zweiradfahrzeugen enthaltend wenigstens ein Halteelement (1), welches mit Mitteln (6) zum Halten des genannten Halteelementes (1) selbst an einer festen Struktur versehen ist, bewegliche Spannelemente (11) zum beiderseitigen Greifen eines Rades (3), welche Spannelemente (11) an dem Halteelement (1) befestigt sind, **dadurch gekennzeichnet**, dass sie weiter enthält:
- wenigstens ein elastisches Element (14), eingesetzt zwischen den beweglichen Spannelementen (11), um einer Umdrehung der beweglichen Spannelemente (11) entgegenzuwirken und ein Greifen des Rades (3) zu gewährleisten;
- Mittel (12) zum Verbinden der beweglichen Spannelemente (11) miteinander, so dass die genannten Elemente (11) sich gleichermassen bewegen.

2. Vorrichtung nach Patentanspruch 1, **dadurch gekennzeichnet**, dass das Halteelement (1) eine Vertiefung (9) aufweist, in welche ein Rad (3) eingesetzt werden kann.

3. Vorrichtung nach Patentanspruch 1, **dadurch gekennzeichnet**, dass das Halteelement (1) eine Gleitfläche (13) aufweist, mit deren Hilfe ein Rad (3) in das genannte Halteelement (1) eingesetzt werden kann.

4. Vorrichtung nach Patentanspruch 1, **dadurch gekennzeichnet**, dass das Halteelement (1) eine polyedrische Kante (7) aufweist, wobei die genannten Mittel (6) zum Halten an mehreren als einer Fläche (8) der genannten Kante (7) angeordnet sind, so dass eine stabile Befestigung der Vorrichtung an einer fester Struktur in mehr als einer Winkelstellung erlaubt ist.

5. Vorrichtung nach Patentanspruch 1, **dadurch gekennzeichnet**, dass die beweglichen Spannelemente (11) wie folgt enthalten:
- zwei zylindrische Stangen (2), die parallele Drehachsen (2a) haben, und welche exzentrisch im Verhältnis zu dem Halteelement (1) drehbar sind, so dass sie aus einer Ruheposition, in welcher die Stangen (2) um einen Abschnitt voneinander getrennt sind, der schmaler ist als die Breite eines Rades (3), in eine aktive Position gebracht werden können, in welcher die Stangen (2) eine in entgegengesetzter Richtung zur anderen gedreht sind, so dass ein Rad (3) zwischen diese eingesetzt werden kann.

6. Vorrichtung nach Patentanspruch 5, **dadurch gekennzeichnet**, dass das elastische Element (14) eine Torsionsfeder (5) ist, deren Enden an den zylindrischen Stangen (2) befestigt sind, und zwar in Ösen (2c), welche Ösen (2c) sich einander genau gegenüberliegen, wenn sich die zylindrischen Stangen (2) in ihrer Ruheposition befinden.

7. Vorrichtung nach Patentanspruch 5, **dadurch gekennzeichnet**, dass die Mittel (12) zum Verbinden der beweglichen Spannelemente (11) miteinander wenigstens ein starres Element enthalten, das mit seinen Enden (4a, 4b) an den oberen Enden der zylindrischen Stangen (2) gehalten wird.

8. Vorrichtung nach Patentanspruch 7, **dadurch gekennzeichnet**, dass das starre Element eine L-förmige Stange (4) ist und Enden (4a, 4b) an den entgegengesetzten Seiten einer die Drehachsen (2a) der Stangen (2) verbindenden Geraden (15) aufweist, und die von der gleichen Länge ist wie der Abstand zwischen den genannten Drehachsen (2a), so dass eine Blockierung und Umdrehungen in umgekehrter Richtung der Stangen (2) verhindert werden.

## Revendications

1. Un dispositif pour garer des véhicules deux-roues, comprenant au moins un élément de support (1) pourvu de moyens (6) pour fixer ledit élément de support (1) à une structure fixe, des éléments mobiles de serrage (11) pour agriper bilatéralement une roue (3), lesquels éléments (11) sont fixés sur l'élément de support (1), caractérisé en ce qu'il comprend en outre:
- au moins un élément élastique (14) interposé entre les éléments mobiles de serrage (11) pour s'opposer à la rotation des éléments (11) et garantir un serrage de la roue (3);
- des moyens (12) pour accoupler les éléments mobiles de serrage (11) de manière à ce que lesdits éléments (11) soient uniformément déplacés.

2. Un dispositif selon la revendication 1, caractérisé en ce que l'élément de support (1) présente une dépression (9) dans laquelle une roue (3) peut être insérée.

3. Un dispositif selon la revendication 1, caractérisé en ce que l'élément de support (1) présente une surface coulissante (13) au moyen de laquelle une roue (3) peut être insérée dans ledit élément de support (1).

4. Un dispositif selon la revendication 1, caractérisé en ce que l'élément de support (1) comprend un bord polyédrique (7), lesdits moyens (6) étant disposés sur plus d'une face (8) dudit bord (7) pour permettre de fixer de manière stable le dispositif en plus d'un de ses angles à une structure fixe.

5. Un dispositif selon la revendication 1, caractérisé en ce que les éléments mobiles de serrage (11) comprenent:
deux barres cylindriques (2) ayant des axes parallèles de rotation (2a) et étant excentriquement pivotables par rapport à l'élément de support (1), de manière à ce qu'elles passent d'une position de repos, dans laquelle les barres (2) sont séparées par une distance inférieure à la largeur d'une roue (3), à une position active, dans laquelle les barres (2) sont pivotées, l'une dans une direction opposée à l'autre, de manière à ce qu'une roue (3) puisse être insérée entre elles.

6. Un dispositif selon la revendication 5, caractérisé en ce que l'élément élastique (14) est un ressort de torsion (5) ayant des extrémités fixées aux barres cylindriques (2) dans des oeillets (2c), lesquels oeillets (2c) sont exactement opposés l'un à l'autre lorsque les barres cylindriques (2) sont dans la position de repos.

7. Un dispositif selon la revendication 5, caractérisé en ce que les moyens (12) pour accoupler les éléments mobiles de serrage (11) comprend au moins un élément rigide fixé par ses extrémités (4a, 4b) aux extrémités supérieures des barres cylindriques (2).

8. Un dispositif selon la revendication 7, caractérisé en ce que l'élément rigide est une barre en forme de L (4) ayant des extrémités (4a, 4b) en des côtés opposés d'une ligne droite (15) joignant les axes de rotation (2a) des barres (2), et étant de longueur égale à une distance entre lesdits axes de rotation (2a), de manière à ce que le blocage et les rotations en direction inverse des barres (2) soient empêchées.
